# EUROPÄISCHE PATENTSCHRIFT

(11) **EP 0 859 498 B1**
(45) Veröffentlichungstag und Bekanntmachung des Hinweises auf die Patenterteilung: **10.05.2006**
(21) Anmeldenummer: 97119601.9
(22) Anmeldetag: 08.11.1997
(51) Int. Cl.: H04M 1/00, H04M 1/72, G06F 3/033

(54) **Mobiltelefon mit adaptiver, berührungsempfindlicher Anzeige**
Mobile phone with adaptive touch screen display
Téléphone mobile avec écran tactile adaptif

(30) Priorität: 14.02.1997 DE 19705636
(43) Veröffentlichungstag der Anmeldung: 19.08.1998
(73) Patentinhaber: ROBERT BOSCH GMBH, 70442 Stuttgart (DE)
(72) Erfinder: Drake, Jochen, 8304 Wolfenbuettel (DE)

(56) Entgegenhaltungen:
- EP-A- 0 651 544
- DE-A- 3 308 169
- DE-A- 4 307 164
- US-A- 5 128 672

## Beschreibung

### Stand der Technik

Die Erfindung geht von einem Funkgerät nach der Gattung des Hauptanspruchs aus.

Aus der noch nicht vorveröffentlichten deutschen Patentanmeldung mit dem Aktenzeichen 196 05 373.0 ist bereits ein als schnurloses Telefon ausgebildetes Gerät bekannt, das eine Bedienoberfläche mit einer Anzeigevorrichtung und einem Tastenfeld aufweist.

Die EP-A 651 544 zeigt ein Funkgerät mit einer berührungssensitiven Anzeigeeinrichtung. Dabei wird durch Berühren vorgegebener Bereiche ein Aufruf von Funktionen des Funkgeräts in Abhängigkeit seines Betriebsmodus erfolgt.

### Vorteile der Erfindung

Das erfindungsgemäße Funkgerät mit den Merkmalen des Hauptanspruchs hat demgegenüber den Vorteil, daß die Anzeigevorrichtung gleichzeitig als Bedienvorrichtung dient. Auf diese Weise läßt sich die Anzeigevorrichtung über die ursprünglich vom Tastenfeld bedeckte Fläche des Funkgerätes ausdehnen, wobei lediglich für den meist auf der gleichen Seite angebrachten Lautsprecher und das im allgemeinen ebenfalls auf dieser Seite angebrachte Mikrophon ein Bereich freizulassen ist. Die Vergrößerung der Anzeigefläche ermöglicht eine großformatigere Darstellung von Zeichen und

Symbolen genauso wie die Anzeige einer größeren Anzahl von Daten. Außerdem wird auch das Tastenfeld vergrößert, so daß mehr und großformatigere Tasten für die Eingabe am Funkgerät realisierbar sind. Selbst eine Verringerung der Größe von Funkgeräten kann daher mit guter Ablesbarkeit der Anzeigevorrichtung und leichter Bedienbarkeit der Tastatur einhergehen.

Vorteilhaft ist weiterhin, daß durch Integration des Tastenfeldes in die Anzeigevorrichtung nur noch eine Baugruppe statt bisher zwei Baugruppen erforderlich ist, so daß Platzbedarf, Verdrahtungsaufwand und Kosten eingespart werden.

Ein Vorteil besteht auch darin, daß durch Integration des Tastenfeldes in die Anzeigevorrichtung der Aufwand für den Aufbau des Gehäuses mit nur einem Durchbruch und für die Abdichtung der Bedienelemente gegenüber dem Gehäuse verringert wird.

Vorteilhaft ist besonders, daß der Aufruf von Funktionen des Funkgerätes in Abhängigkeit von einem Betriebsmodus des Funkgerätes und der an der Anzeigevorrichtung dargestellten Informationen erfolgt. Auf diese Weise ist eine kontextsensitive Nutzung der für die Eingabe und Anzeige vorhandenen Fläche möglich, so daß die Übersichtlichkeit für den Benutzer verbessert und die Bedienerführung erleichtert wird.

Durch die in den Unteransprüchen aufgeführten Maßnahmen sind vorteilhafte Weiterbildungen und Verbesserungen des im Hauptanspruch angegebenen Funkgerätes möglich.

Vorteilhaft ist dabei, daß die Anzeigevorrichtung in mindestens einen Bereich zur Aktivierung von Funktionen und mindestens einen Bereich zur Anzeige von Daten aufgeteilt ist. Auf diese Weise wird die Übersichtlichkeit für den Benutzer weiter erhöht und die Bedienerführung weiter vereinfacht.

Vorteilhaft ist außerdem, daß bei Datenempfang von einer Funkstation oder Aufrufen von Menüfunktionen der Bereich zur Anzeige empfangener Daten oder verfügbarer Menüpunkte eine vorgegebene Größe nicht unterschreitet. Auf diese Weise kann die Anzeigevorrichtung bei einem Betriebsmodus, der hauptsächlich zur Darstellung von Daten dient, so aufgeteilt werden, daß möglichst viele der anzuzeigenden Daten gleichzeitig sichtbar sind, so daß eine möglichst vollständige Darstellung der anzuzeigenden Daten gegeben ist.

Vorteilhaft ist weiterhin, daß bei Dateneingabe der Bereich zur Anzeige der eingegebenen Daten eine vorgegebene Größe nicht überschreitet. Bei Dateneingabe kann dem Benutzer somit eine möglichst große Anzahl von Tasten zur Auswahl von Funktionen des Funkgerätes übersichtlich zur Verfügung gestellt werden, wobei die bei Dateneingabe lediglich für Kontrollzwecke vorgesehene Anzeigemöglichkeit der eingegebenen Daten nur eine geringe Fläche der Anzeigevorrichtung einzunehmen braucht.

Vorteilhaft ist die Aktivierung der Anzeigevorrichtung beim Datenempfang von einer Funkanlage, durch ein ständig aktiviertes erstes Schaltsymbol oder durch die Betätigung eines Kontaktes, vorzugsweise bei der Entfernung einer Schutzabdeckung des Funkgerätes. Auf diese Weise wird die Anzeigevorrichtung nur für den Betrieb aktiviert, so daß der Stromverbrauch für die Darstellung der Daten- und Steuerungssymbole an der Anzeigevorrichtung bzw. der Abbildung einer Tastatur auf der berührungssensitiven Anzeigevorrichtung reduziert wird.

Vorteilhaft ist außerdem, daß die Anzeigevorrichtung mindestens ein zweites Schaltsymbol aufweist und daß durch Betätigung des zweiten Schaltsymbols eine Umschaltung zwischen numerischer und alphanumerischer Eingabe erfolgt. Auf diese Weise wird der Bedienkomfort und die Übersichtlichkeit weiter erhöht, da beispielsweise keine Mehrfachbelegung einzelner Tasten mit numerischen und alphanumerischen Zeichen erforderlich ist.

Vorteilhaft ist weiterhin, daß die Anzeigevorrichtung ein drittes Schaltsymbol aufweist und daß durch Betätigung des dritten Schaltsymbols eine Umschaltung zwischen Groß- und Kleinschreibung erfolgt. Auch auf diese Weise wird der Bedienkomfort und die Übersichtlichkeit weiter erhöht.

### Zeichnung

Ausführungsbeispiele der Erfindung sind in der Zeichnung dargestellt und in der nachfolgenden Beschreibung näher erläutert. Es zeigen Figur 1 ein erfindungsgemäßes Funkgerät mit einer Anzeigevorrichtung in einer Grundeinstellung, Figur 2 ein erfindungsgemäßes Funkgerät mit einer Anzeigevorrichtung in einer Einstellung zur Anzeige von empfangenen Daten, Figur 3 ein erfindungsgemäßes Funkgerät mit einer Anzeigevorrichtung zur Eingabe einer zu sendenden alphanumerischen Nachricht, Figur 4 ein erfindungsgemäßes Funkgerät mit einer Anzeigevorrichtung für einen Menüaufruf, Figur 5 ein erfindungsgemäßes Funkgerät mit einer Anzeigevorrichtung in einer alternativen Grundeinstellung und Figur 6 ein erfindungsgemäßes Funkgerät mit einer Anzeigevorrichtung in einer weiteren alternativen Grundeinstellung.

### Beschreibung des Ausführungsbeispiels

Die Erfindung betrifft die Ein-/Ausgabe-Schnittstelle bzw. die Bedieneroberfläche eines tragbaren Funkgerätes, beispielsweise eines Mobiltelefones oder eines Schnurlostelefones. Die Baugruppen für die Bedieneroberfläche dieser Geräte bestehen neben Mikrophon und Lautsprecher bzw. Hörer insbesondere aus einer Tastatur und einer Anzeigevorrichtung für Symbole und numerische bzw. alphanumerische Zeichen.

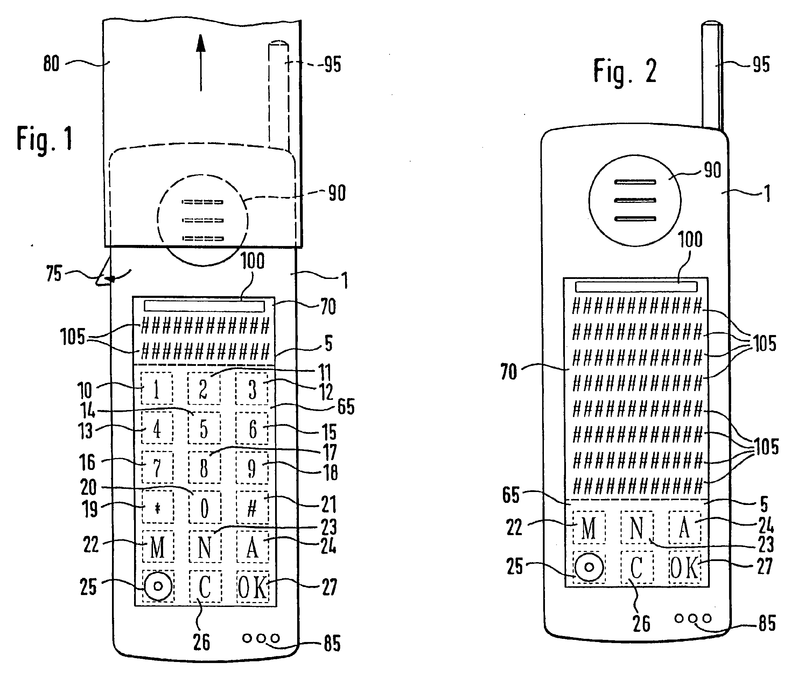

In Figur 1 kennzeichnet 1 ein als Mobiltelefon ausgebildetes Funkgerät. Das Mobiltelefon 1 weist an einer Oberfläche seines Gehäuses Lautsprecheröffnungen 90 an einem oberen Ende der Oberfläche und Mikrophonöffnungen 85 an einem unteren Ende der Oberfläche auf. Zwischen den Lautsprecheröffnungen 90 und den Mikrophonöffnungen 85 ist eine Anzeigevorrichtung 5 angeordnet. Am oberen Ende des Mobiltelefons 1 ist außerdem eine Antenne 95 für die Aussendung und den Empfang von Daten vorgesehen. Die Anzeigevorrichtung 5 ist berührungssensitiv ausgebildet und integriert die Funktionen einer Tastatur und einer Anzeige. Dabei ist die Anzeigevorrichtung 5 in einen Anzeigebereich 70 oberhalb etwa einer in Figur 1 gestrichelt dargestellten Linie zur Anzeige von Daten und einen Funktionsbereich 65 unterhalb dieser gestrichelten Linie zur Aktivierung von Funktionen aufgeteilt. Diese Aufteilung ist kontextabhängig, d. h. sie hängt vom gerade eingestellten Betriebsmodus des Mobiltelefons 1 ab. Über die Elemente der Anzeigevorrichtung 5 können sowohl Daten ausgegeben, d. h. angezeigt werden, als auch Befehle, wie beispielsweise Steuerungsfunktionen oder Dateneingabefunktionen eingegeben werden. Die Eingabe erfolgt dabei beispielsweise durch Änderung des Widerstandes oder des Lichteinfalles bei der Berührung bestimmter Flächenelemente insbesondere mit einem Finger des Benutzers oder mit einem Stift. Figur 1 zeigt die Anzeigevorrichtung 5 in einer Grundeinstellung. Eine Aktivierung der Anzeigevorrichtung 5 erfolgt dabei durch das Entfernen einer Schutzabdeckung 80 in Pfeilrichtung nach oben gemäß Figur 1, wodurch ein Kontakt 75 beispielsweise durch Federkraft in Pfeilrichtung nach links gemäß Figur 1 betätigt wird. Eine Aktivierung der Anzeigevorrichtung 5 kann jedoch auch durch Datenempfang von einer Funkanlage erfolgen. Eine weitere Möglichkeit zur Aktivierung der Anzeigevorrichtung 5 besteht darin, daß die Anzeigevorrichtung 5 ein ständig aktiviertes erstes Schaltsymbol 25 aufweist und daß eine Aktivierung weiterer Schaltsymbole bzw. der gesamten Anzeigevorrichtung 5 durch Betätigung des ständig aktivierten ersten Schaltsymbols 25 erfolgt. Eine Deaktivierung der Anzeigevorrichtung 5 erfolgt dann analog durch Einschieben des Mobiltelefons 1 in die Schutzabdeckung 80, wobei der Kontakt 75 entgegen der in Figur 1 dargestellten Pfeilrichtung eingedrückt wird. Eine Deaktivierung der Anzeigevorrichtung 5 kann auch durch Betätigung des ersten Schaltsymbols 25 erfolgen. Die Schutzabdeckung 80 kann also neben dem mechanischen Schutz des Mobiltelefons 1 auch der Aktivierung der Anzeigevorrichtung 5 dienen. Eine weitere Möglichkeit zur Aktivierung und Deaktivierung der Anzeigevorrichtung 5 kann auch darin bestehen, einen Kontakt außerhalb der Anzeigevorrichtung 5 als Taste auszuführen, beispielsweise in Form des Kontaktes 75. Soll das erste Schaltsymbol 25 als ständig aktiviertes Schaltsymbol zur Aktivierung der Anzeigevorrichtung 5 dienen, so bleibt es auch nach einer Deaktivierung der Anzeigevorrichtung 5 aktiviert.

Die Grundeinstellung der Anzeigevorrichtung 5 gemäß Figur 1 umfaßt im Anzeigebereich 70 eine Symbolzeile 100 zur Darstellung der Empfangsfeldstärke, des Akkumulatorladezustandes, der Uhrzeit und/oder dergleichen. Weiterhin umfaßt der Anzeigebereich 70 zwei Textzeilen 105 zur Darstellung von jeweils zwölf Zeichen. Der Funktionsbereich 65 umfaßt Tastenfelder 10, 11, ..., 18, 20 für numerische Zifferneingaben der Ziffern 1, 2, ..., 9, 0, ein Tastenfeld 19 als Sterntaste, ein Tastenfeld 21 als Rautentaste, das erste Schaltsymbol 25 zur Aktivierung bzw. Deaktivierung der Anzeigevorrichtung 5, ein Schaltsymbol 23 zur Umschaltung auf numerische Eingabe, ein Schaltsymbol 24 zur Umschaltung auf alphanumerische Eingabe, ein Schaltsymbol 22 für den Aufruf eines Bedienmenüs, ein Schaltsymbol 26 zum Löschen einer zuvor getätigten Eingabe und zum Löschen einer Funkverbindung und ein Schaltsymbol 27 zur Bestätigung einer zuvor getätigten Eingabe und zur Aufnahme einer Funkverbindung.

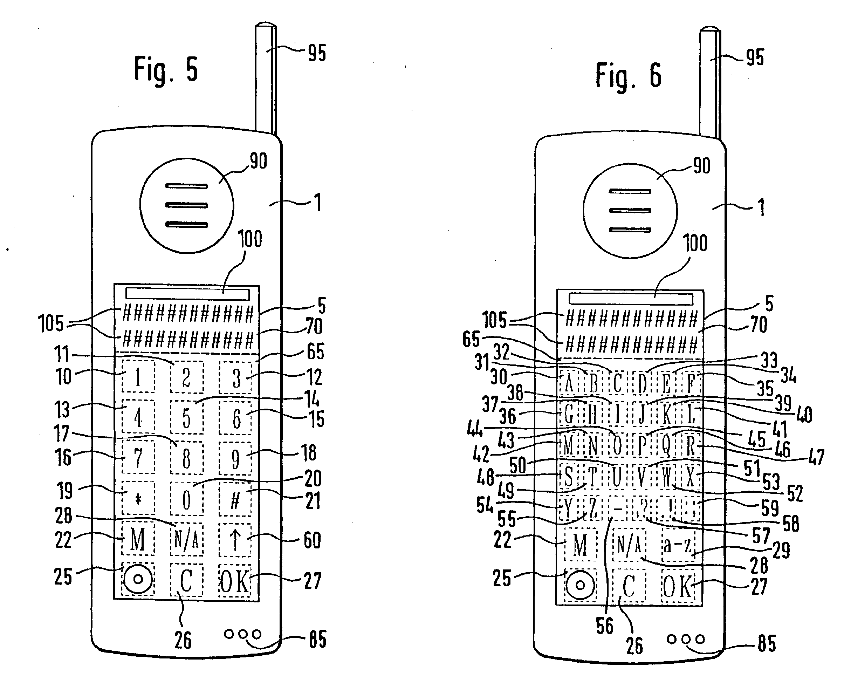

Beim Empfang einer Nachricht aus dem Funknetz wird die Anzeigevorrichtung 5 auf einen anderen Betriebsmodus zur Darstellung der empfangenen Nachricht umgeschaltet. Dabei wird der Anzeigebereich 70 um sechs Zeilen ä zwölf Zeichen erweitert und der Funktionsbereich 65 durch Wegfall der numerischen Tastenfelder 10, ..., 18, 20, des Stern-Tastenfeldes 19 und des Rauten-Tastenfeldes 21 entsprechend verkleinert. Im Anzeigebereich 70 sind auf diese Weise sechsundneunzig Zeichen darstellbar. Bei empfangenen Nachrichten mit mehr als sechsundneunzig Zeichen kann nicht die gesamte Nachricht im Anzeigebereich 70 dargestellt werden. Sieht man jedoch im Funktionsbereich 65 ein weiteres Tastenfeld vor, so können durch Betätigung dieses weiteren Tastenfeldes bislang nicht dargestellte Empfangsdaten zur Anzeige gebracht werden. Anstelle des Schaltsymbols 23 zur Umschaltung auf numerische Eingabe und des Schaltsymbols 24 zur Umschaltung auf alphanumerische Eingabe kann gemäß Figur 5 auch ein einziges Schaltsymbol 28 zur wechselweisen Umschaltung zwischen numerischer und alphanumerischer Eingabe vorgesehen werden, so daß Platz für ein weiteres Schaltsymbol 60 geschaffen wird, das die beschriebene Umschaltung zur seitenweisen Darstellung überlanger empfangener Nachrichten bewirkt. Dabei stellt Figur 5 ein erfindungsgemäßes Funkgerät mit der Anzeigevorrichtung 5 in einer alternativen Grundeinstellung dar, wobei abgesehen von der beschriebenen Umgestaltung der Anzeigevorrichtung 5 mit dem Schaltsymbol 28 zur wechselweisen Umschaltung zwischen numerischer und alphanumerischer Eingabe und mit dem weiteren Schaltsymbol 60 zur seitenweisen Darstellung die Anzeigevorrichtung 5 genauso aufgebaut ist wie im Ausführungsbeispiel gemäß Figur 1. Dabei kann auch ausgehend von der Grundeinstellung gemäß Figur 1 bei Empfang einer Nachricht der verbleibende Funktionsbereich 65 gemäß der Grundeinstellung von Figur 5 umgeschaltet werden.

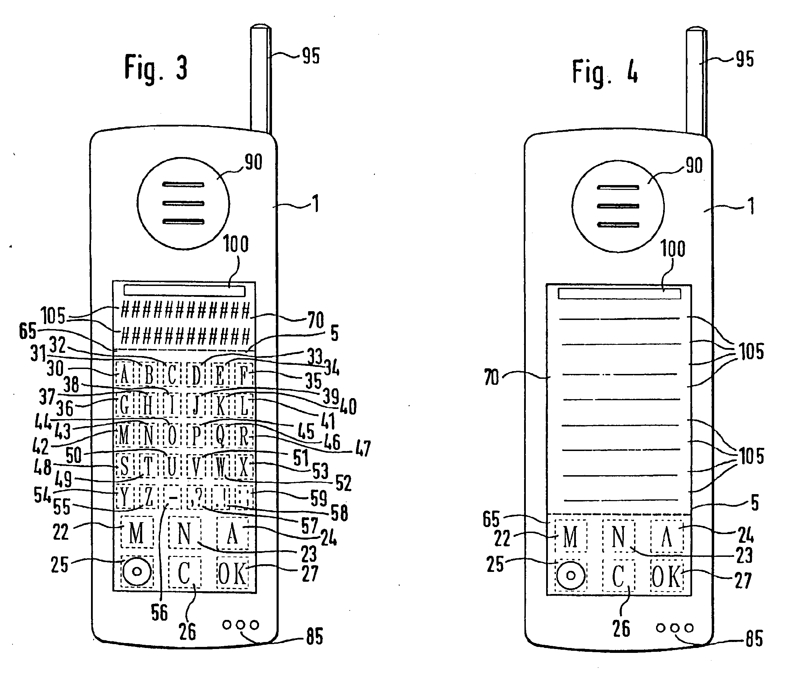

Figur 3 zeigt ein erfindungsgemäßes Funkgerät mit der Aufteilung der Anzeigevorrichtung 5 gemäß der Grundeinstellung nach Figur 1. In Figur 3 wurden jedoch durch Betätigung des Schaltsymbols 24 zur Umschaltung auf alphanumerische Eingabe die numerischen Tastenfelder 10, ..., 18, 20, das Stern-Tastenfeld 19 und das Rauten-Tastenfeld 21 durch alphanumerische Tastenfelder 30, 31, ..., 55 und Tastenfelder 56, 57, 58, 59 für Sonderzeichen ersetzt. Die alphanumerischen Tastenfelder 30, ..., 55 stellen dabei die Großbuchstaben A, B, C, ..., Z des Alphabetes dar, das Tastenfeld 56 ermöglicht die Eingabe eines Leerzeichens oder eines Bindestrichs, das Tastenfeld 57 die Eingabe eines Kommas oder eines Fragezeichens, das Tastenfeld 58 die Eingabe eines Punktes oder eines Ausrufezeichens und das Tastenfeld 59 die Eingabe eines Doppelpunktes oder eines Strichpunktes. Eine Umschaltung zwischen den alternativen Eingabemöglichkeiten der Tastenfelder 56, ..., 59 für Sonderzeichen läßt sich beispielsweise durch ein Zeitkriterium bei der Schaltflächenbetätigung realisieren. So kann durch kurzes Antippen des entsprechenden Tastenfeldes das eine und durch längeres Antippen das andere Sonderzeichen eingegeben werden. Für das längere Antippen muß dabei eine vorgegebene Zeitdauer von beispielsweise einer Sekunde überschritten werden. Analog kann auch für die Umschaltung zwischen Großbuchstaben und Kleinbuchstaben bei den Tastenfeldern 30, ..., 55 für alphanumerische Eingabe verfahren werden. Eine Umschaltung zwischen Groß- und Kleinbuchstaben und zwischen zwei jeweils einem Tastenfeld 56, 57, 58, 59 zugeordneten Sonderzeichen kann auch durch ein eigens dafür vorgesehenes Schaltsymbol 29 gemäß Figur 6 realisiert werden. Für dieses Schaltsymbol 29 kann dabei gemäß Figur 5 dadurch Platz geschaffen werden, daß die Umschaltung zwischen numerischer und alphanumerischer Eingabe durch das entsprechende Schaltsymbol 28 wie bereits beschrieben erfolgt. Figur 6 stellt somit eine weitere alternative Grundeinstellung nach Umschaltung auf alphanumerische Eingabe für die Anzeigevorrichtung 5 dar.

Die Tastenfelder 30, ..., 55 zur alphanumerischen Dateneingabe und die Tastenfelder 56, ..., 59 zur Eingabe von Sonderzeichen sind mit Dateneingabefunktionen verknüpft und ermöglichen die Eingabe einer alphanumerischen Nachricht. In dem durch Umschalten auf alphanumerische Eingabe gekennzeichneten Betriebsmodus gemäß Figur 3 können die jeweils letzten vierundzwanzig Zeichen einer Nachricht eingegeben, angezeigt und durch Antippen in der jeweiligen Textzeile 105 editiert werden, wobei im ebenfalls berührungssensitiven Anzeigebereich 70 der Anzeigebereich 70 mit den beiden Textzeilen 105 und der Symbolzeile 100 im Vergleich zur Grundeinstellung gemäß Figur 1 nach wie vor unverändert ist. Eingabekorrekturen sind beispielsweise durch Betätigung des Schaltsymbols 26 zum Löschen der zuletzt getätigten Eingabe möglich. Auch kann für den Eingabebetriebsmodus ein Pfeiltastenfeld vorgesehen sein, durch dessen Betätigung eine beliebige Stelle des Eingabetextes selektiert und durch ein neues Zeichen überschrieben werden kann. Zur Korrektur kann das entsprechende Zeichen in einer der beiden dargestellten Textzeilen 105 auch durch Antippen, wie beschrieben, selektiert und durch ein neues Zeichen überschrieben werden. Die Eingabe der vollständigen Nachricht wird durch Betätigung der Schaltfläche 27 zur Bestätigung der Eingabe abgeschlossen, woraufhin ein Betriebsmodus zum Senden der eingegebenen Nachricht eingestellt wird, der eine Aufteilung der Anzeigevorrichtung 5 gemäß Figur 2 vorsieht und die seitenweise Darstellung des gesamten eingegebenen Textes gegebenenfalls durch die beschriebene Umschaltung mittels der entsprechenden Schaltsymbole 60 ermöglicht. Die Aussendung der Nachricht erfolgt dann im Sende-Betriebsmodus gemäß Figur 2 wiederum durch Betätigung des Schaltsymbols 27 zur Aufnahme einer Verbindung. Auch in dem Sende-Betriebsmodus gemäß Figur 2 ist noch ein Editieren der eingegebenen Zeichen durch Antippen des zu korrigierenden Zeichens in der entsprechenden berührungssensitiven Textzeile 105 und damit verbundenem Rücksprung in den Eingabe-Betriebsmodus gemäß Figur 3 möglich. Im Eingabe-Betriebsmodus gemäß Figur 3 kann dann dieses Zeichen durch ein neues ersetzt werden.

Figur 4 zeigt einen Menü-Betriebsmodus, der nach Betätigung des Schaltsymbols 22 zum Menüaufruf eingestellt wird und dessen Aufteilung der Anzeigevorrichtung 5 der Aufteilung gemäß Figur 2 entspricht. Die Textzeilen 105 dienen nun der Darstellung von Menüebenen als berührungssensitive Schaltflächen, wobei gegebenenfalls eine Textzeile 105 zur Umschaltung auf weitere zunächst nicht sichtbare Menüebenen vorgesehen sein kann. Durch Antippen der gewünschten Menüebene bzw. Textzeile 105 können weitere Untermenüs oder Menüpunkte selektiert und zur Anzeige gebracht werden. Der Aufruf von Untermenüs oder Menüpunkten erfolgt ebenfalls durch Antippen des gewünschten Punktes und Bestätigung durch Betätigung des Schaltsymbols 27 zur Bestätigung der Eingabe. Dabei erfolgt nach Auswahl beispielsweise eines Menüpunktes "Nachricht" oder "Telefonbuch" eine automatische kontextsensitive Umschaltung in den alphanumerischen Eingabe-Betriebsmodus gemäß Figur 3 oder Figur 6, der auch für Einträge in einen Telefonbuchspeicher des Mobiltelefons 1 in analoger Weise wie für die Eingabe einer Nachricht verwendet werden kann. Die den Schaltsymbolen zugewiesenen Steuerfunktionen im Funktionsbereich 65 der Anzeigevorrichtung 5 können dem jeweils eingestellten Betriebsmodus ebenfalls beliebig angepaßt werden und die für den jeweiligen Betriebsmodus erforderlichen Steuerfunktionen verfügbar machen.

Die Anwahl eines Teilnehmers des Mobilfunknetzes erfolgt beispielsweise in der Grundeinstellung gemäß Figur 1, wobei die gewählte Rufnummer mittels der beiden Textzeilen zur Kontrolle wiedergegeben wird. Bei einem ankömmenden Ruf kann beispielsweise die Rufnummer und/oder der Name des rufenden Teilnehmers ebenfalls an den beiden Textzeilen 105 zur Anzeige gebracht werden. Es ist jedoch auch möglich, den Betriebsmodus zur Anzeige von empfangenen Daten gemäß Figur 2 zur Anzeige der Rufnummer und/oder des Namens eines rufenden Teilnehmers zu verwenden, wobei dann auch weitere Hinweistexte wie beispielsweise "Externer Anruf", "Übergebener Ruf", der Name und/oder die Rufnummer eines anklopfenden oder eines aktiven Teilnehmers einer Konferenzschaltung in den Textzeilen 105 zur Anzeige gebracht werden können.

Bei der Grundeinstellung bzw. dem Eingabe-Betriebsmodus gemäß Figur 1, Figur 3, Figur 5 und Figur 6 sind nur jeweils zwei Textzeilen 105 zur Kontrolle der Eingabe vorgesehen. Werden weitere Schaltsymbole für Steuerfunktionen oder Tastenfelder für Dateneingabefunktionen benötigt, so kann auch nur eine Zeile zur Kontrolle der Eingabe zur Verfügung gestellt werden.

Zur Realisierung der berührungssensitiven Anzeigevorrichtung 5 ist diese in sensitive Elemente aufzuteilen. Je nach eingestelltem Betriebsmodus sind mit den sensitiven Elementen unterschiedliche Steuer- und Dateneingabefunktionen verknüpft, die durch Betätigung der entsprechenden Elemente aktiviert werden. Die für die Auslösung einer Funktion des Mobiltelefons 1 vorgesehenen sensitiven Elemente sind dabei an der Anzeigevorrichtung 5 entsprechend farblich von der Umgebung abgestuft. Eine Variation der entsprechenden Tastenfelder und Schaltsymbole in der Größe kann durch entsprechende Zusammenschaltung mehrerer sensitiver Elemente erfolgen. Auf diese Weise können die Tastenfelder und Schaltsymbole in Abhängigkeit des eingestellten Betriebsmodus, der für diesen Betriebsmodus benötigten Anzahl von Tastenfeldern und Schaltsymbolen und der zur Verfügung stehenden Größe der Anzeigevorrichtung 5 größtmöglich zur Bedienungsvereinfachung ausgeführt werden. Bereiche auf der Anzeigevorrichtung 5, die von ihrer Umgebung farblich nicht abgestuft und daher nicht als Tastenfelder oder Schaltsymbole gekennzeichnet sind, sind im entsprechenden Betriebsmodus mit sensitiven Elementen verbunden, denen in diesem Betriebsmodus keine Funktion zugeordnet ist, so daß eine Betätigung dieser Bereiche ohne Wirkung bleibt, es sei denn, es handelt sich um die beschriebenen berührungssensitiven Textzeilen 105 zur Editierung einzelner Zeilen. Zur flexiblen Gestaltung der Anzeigevorrichtung 5 mit Tastenfeldern und Schaltsymbolen ist diese vorteilhafterweise als graphikfähige Flüssigkristallanzeige ausgebildet. Die Zuordnung der sensitiven Elemente zu Dateneingabefunktionen und zu Steuerfunktionen hängt vom jeweils gewählten Betriebsmodus ab. Abgesehen von der farblichen Abstufung der Anzeigevorrichtung 5 an der Stelle der Tastenfelder und Schaltsymbole werden diese in Abhängigkeit des Betriebsmodus auch mit Symbolen dargestellt, die dem Benutzer eine Zuordnung zu den mit den Tastenfeldern und Schaltsymbolen verbundenen Funktionen des Mobiltelefons 1 ermöglicht. So sind die numerischen Tastenfelder 10, ..., 18, 20 durch die entsprechende Ziffer, das Stern-Tastenfeld 19 durch einen Stern, das Rauten-Tastenfeld 21 durch eine Raute, die alphanumerischen Tastenfelder 30, ..., 55 durch die entsprechenden Buchstaben, die Tastenfelder 56, ..., 59 für Sonderzeichen durch die entsprechenden Sonderzeichen, das Schaltsymbol 22 zum Menüaufruf mit einem "M", das Schaltsymbol 23 zur Umschaltung auf numerische Eingabe durch ein "N", das Schaltsymbol 24 zur Umschaltung auf alphanumerische Eingabe durch ein "A", das Schaltsymbol 25 zur Aktivierung und Deaktivierung des Mobiltelefons 1 und der Anzeigevorrichtung 5 durch einen Kreis mit einem Punkt im Kreismittelpunkt, das Schaltsymbol 26 zur Löschung der zuletzt getätigten Eingabe und zur Löschung einer Verbindung durch ein "C", das Schaltsymbol 27 zur Bestätigung der Eingabe und zur Aufnahme der Verbindung durch "OK" das Schaltsymbol 28 zur wechselweisen Umschaltung zwischen numerischer und alphanumerischer Eingabe durch "N/A", das Schaltsymbol 29 zur wechselweisen Umschaltung zwischen Groß- und Kleinbuchstaben durch "a-z" und das Schaltsymbol 60 zur seitenweisen Umschaltung auf bislang nicht sichtbare Eingabe-, Empfangs- oder Menüdaten durch einen nach oben weisenden Pfeil gekennzeichnet.

Bei gleicher Information auf einem Tastenfeld 30,..., 59 oder einem Schaltsymbol 22, 23, 24, 25, 26, 27, 28, 29, 60 können je nach eingestelltem Betriebsmodus des Mobiltelefons 1 unterschiedliche Funktionen des Mobiltelefons 1 mit den entsprechenden Tastenfeldern 30,..., 59 und den Schaltsymbolen 22,..., 29, 60 verknüpft sein. So ist beispielsweise mit dem Schaltsymbol 26, das durch den Buchstaben "C" gekennzeichnet ist, in einen Eingabebetriebsmodus das Löschen der zuletzt getätigten Eingabe möglich, im Betriebsmodus einer Gesprächsverbindung jedoch das Löschen bzw. der Abbruch der Verbindung.

## Patentansprüche

1. Funkgerät (1), insbesondere Mobilfunkgerät oder Schnurlostelefon, mit einer Anzeigevorrichtung (5), die berührungssensitiv ausgebildet ist, und die mindestens einen Bereich (70) zur Anzeige von Daten und einen Bereich (65) als Bedienvorrichtung (10, 11, 12, ..., 59, 60) zur Aktivierung von Funktionen umfasst, wobei durch Berührung vorgegebener Bereiche im Bereich der Bedienvorrichtung (10, 11, 12, ..., 59, 60) ein Aufruf von Funktionen des Funkgeräts in Abhängigkeit von einem Betriebsmodus des Funkgeräts und der an der Anzeigevorrichtung dargestellten Informationen erfolgt, **dadurch gekennzeichnet, dass** die Anzeigevorrichtung derart ausgestaltet ist, dass bei einem Nachrichtenempfang die Anzeigevorrichtung in einen Betriebsmodus zur Darstellung der empfangenen Nachricht umgeschaltet wird, wobei eine Änderung der Größen des Bereichs (65) zur Aktivierung von Funktionen und des Bereichs (70) zur Anzeige von Daten erfolgt.

2. Funkgerät (1) nach Anspruch 1, **dadurch gekennzeichnet, daß** bei Datenempfang von einer Funkstation oder Aufruf von Menüfunktionen der Bereich (70) zur Anzeige empfangener Daten oder verfügbarer Menüpunkte eine vorgegebene Größe nicht unterschreitet.

3. Funkgerät (1) nach Anspruch 1, oder 2, **dadurch gekennzeichnet, daß** bei Dateneingabe der Bereich (70) zur Anzeige der eingegebenen Daten eine vorgegebene Größe nicht überschreitet.

4. Funkgerät (1) nach einem der vorherigen Ansprüche, **dadurch gekennzeichnet, daß** beim Datenempfang von einer Funkanlage eine Aktivierung der Anzeigevorrichtung (5) erfolgt.

5. Funkgerät (1) nach einem der vorherigen Ansprüche, **dadurch gekennzeichnet, daß** die Anzeigevorrichtung (5) ein ständig aktiviertes erstes Schaltsymbol (25) aufweist und daß eine Aktivierung weiterer Schaltsymbole der Anzeigevorrichtung (5) durch Betätigung des ständig aktivierten ersten Schaltsymbols (25) erfolgt.

6. Funkgerät (1) nach einem der vorherigen Ansprüche, **dadurch gekennzeichnet, daß** eine Aktivierung der Anzeigevorrichtung (5) durch die Betätigung eines Kontaktes (75), vorzugsweise bei der Entfernung einer Schutzabdeckung (80) des Funkgerätes (1) erfolgt.

7. Funkgerät (1) nach einem der vorherigen Ansprüche, **dadurch gekennzeichnet, daß** die Anzeigevorrichtung (5) mindestens ein zweites Schaltsymbol (23, 24, 28) aufweist und daß durch Betätigung des zweiten Schaltsymbols (23, 24, 28) eine Umschaltung zwischen numerischer und alphanumerischer Eingabe erfolgt.

8. Funkgerät (1) nach einem der vorherigen Ansprüche, **dadurch gekennzeichnet, daß** die Anzeigevorrichtung (5) ein drittes Schaltsymbol (29) aufweist und daß durch Betätigung des dritten Schaltsymbols (29) eine Umschaltung zwischen Groß- und Kleinschreibung erfolgt.

## Claims

1. Radio (1), in particular mobile radio or cordless telephone, having a display apparatus (5) which is designed to be touch-sensitive and has at least one area (70) for displaying data and one area (65) as a control apparatus (10, 11, 12, ..., 59, 60) for activation of functions, in which case functions of the radio are called by touching predetermined areas in the area of the control apparatus (10, 11, 12, ..., 59, 60), as a function of an operating mode of the radio and of the information displayed on the display apparatus, **characterized in that** the display apparatus is designed in such a way that, when a message is received, the display apparatus is switched to an operating mode for displaying the received message, with the sizes of the area (65) being changed in order to activate functions and of the area (70) in order to display data.

2. Radio (1) according to Claim 1, **characterized in that**, when data is received by a radio station or menu functions are called, the area (70) for displaying received data or available menu items is not less than a predetermined size.

3. Radio (1) according to Claim 1 or 2, **characterized in that** when data is entered, the area (70) for displaying the entered data is not larger than a predetermined size.

4. Radio (1) according to one of the preceding claims, **characterized in that**, when data is received from a radio installation, the display apparatus (5) is activated.

5. Radio (1) according to one of the preceding claims, **characterized in that** the display apparatus (5) has a first switching symbol (25) which is activated continuously, and **in that** further switching symbols are activated on the display apparatus (5) by operation of the first switching symbol (25), which is activated continuously.

6. Radio (1) according to one of the preceding claims, **characterized in that** the display apparatus (5) is activated by operation of a contact (75), preferably on removal of a protective cover (80) from the radio (1).

7. Radio (1) according to one of the preceding claims, **characterized in that** the display apparatus (5) has at least one second switching symbol (23, 24, 28), and **in that** operation of the second switching symbol (23, 24, 28) results in switching between a numerical input and an alphanumerical input.

8. Radio (1) according to one of the preceding claims, **characterized in that** the display apparatus (5) has a third switching symbol (29), and **in that** operation of the third switching symbol (29) results in switching between upper-case and lower-case letters.

## Revendications

1. Appareil de radiocommunication (1), en particulier appareil de radiocommunication mobile ou téléphone sans fil, comprenant un dispositif d'affichage (5) tactile, qui comprend au moins une zone (70) pour l'affichage de données et une zone (65) faisant office de dispositif de commande (10, 11, 12, ..., 59, 60) pour l'activation de fonctions, l'effleurement de zones prédéterminées dans la zone du dispositif de commande (10, 11, 12, ... , 59, 60) permettant d'appeler des fonctions de l'appareil de radiocommunication en fonction d'un mode de fonctionnement de l'appareil de radiocommunication et des informations représentées sur le dispositif d'affichage,
**caractérisé en ce que**
lors de la réception de messages, le dispositif d'affichage passe dans un mode de fonctionnement pour représenter le message reçu, ce qui entraîne une modification de la taille de la zone (65) pour l'activation de fonctions et de la zone (70) pour l'affichage de données.

2. Appareil de radiocommunication (1) selon la revendication 1,
**caractérisé en ce que**
lors de la réception de données à partir d'une station radio ou lors de l'appel de fonctions de menu, la zone (70) pour l'affichage des données reçues ou des points de menu disponibles n'est pas inférieure à une taille prédéterminée.

3. Appareil de radiocommunication (1) selon la revendication 1 ou 2,
**caractérisé en ce que**
lors de l'entrée de données, la zone (70) pour l'affichage des données entrées ne dépasse pas une taille prédéterminée.

4. Appareil de radiocommunication (1) selon l'une des revendications précédentes,
**caractérisé en ce que**
lors de la réception de données à partir d'une installation radio, il se produit une activation du dispositif d'affichage (5).

5. Appareil de radiocommunication (1) selon l'une des revendications précédentes,
**caractérisé en ce que**
le dispositif d'affichage (5) présente un premier symbole de commutation (25) activé en permanence et l'activation d'autres symboles de commutation du dispositif d'affichage (5) s'effectue par l'actionnement du symbole de commutation (25) activé en permanence.

6. Appareil de radiocommunication (1) selon l'une des revendications précédentes,
**caractérisé en ce que**
l'activation du dispositif d'affichage (5) s'effectue par l'actionnement d'un contact (75), de préférence lors du retrait d'un couvercle de protection (80) de l'appareil de radiocommunication (1).

7. Appareil de radiocommunication (1) selon l'une des revendications précédentes,
**caractérisé en ce que**
le dispositif d'affichage (5) présente au moins un deuxième symbole de commutation (23, 24, 28) et l'actionnement du deuxième symbole de commutation (23, 24, 28) permet une commutation entre une entrée numérique et une entrée alphanumérique.

8. Appareil de radiocommunication (1) selon l'une des revendications précédentes,
**caractérisé en ce que**
le dispositif d'affichage (5) présente un troisième symbole de commutation (29) et l'actionnement du troisième symbole de commutation (29) permet une commutation entre une écriture majuscule et une écriture minuscule.
